# EUROPEAN PATENT APPLICATION

(11) **EP 4 852 119 A1**
(43) Date of publication of application: **09.12.2026**
(21) Application number: 25907314.6
(22) Date of filing: 17.12.2025
(51) Int. Cl.: H01M 10/056, H01M 10/0565, H01M 10/0562, H01M 10/052, H01M 4/134, H01M 4/38, H01M 10/42

(54) **BATTERY SEPARATOR AND BATTERY**

(30) Priority: 17.12.2024 KR 20240189028
(71) Applicant: LG Chem, Ltd., Seoul 07336 (KR)
(72) Inventor: CHO, Sungjun, Seoul 07796 (KR); KIM, Rayoung, Seoul 07796 (KR); LEE, Kyoungsoo, Seoul 07796 (KR)
(74) Representative: Hoffmann Eitle
(86) International application number: PCT/KR2025/021997
(87) International publication number: WO 2026/135231

(57) **Abstract**

A battery separator and a battery of the present invention may comprise: a base layer; a first inorganic layer positioned on one surface of the base layer and comprising first inorganic particles; a second inorganic layer positioned on the other surface of the base layer and comprising second inorganic particles; and a first electrolyte layer positioned on one surface of the first inorganic layer and comprising a first electrolyte composition, wherein the first inorganic particles may comprise flame-retardant inorganic particles, and the second inorganic particles may comprise lithium ion conductive inorganic particles.

## Description

### [TECHNICAL FIELD]

This document claims the benefit of the priority date of Korean Patent Application No. 10-2024-0189028 filed with the Korean Intellectual Property Office on December 17, 2024, the entire contents of which are incorporated herein by reference.

The present invention relates to a battery separator.

The present invention relates to a battery.

### [BACKGROUND ART]

A gel polymer electrolyte (GPE) may comprise a binder and a liquid electrolyte. The gel polymer electrolyte is usually included in an electrode of a battery and may be combined with an electrode active material. In this case, a polyolefin-based film may be disposed between the electrodes (positive electrode and negative electrode) to act as a separator that prevents physical short-circuiting of the electrodes.

A lithium metal battery is a battery that includes lithium metal as a negative electrode active material.

### [SUMMARY OF THE INVENTION]

### [TECHNICAL PROBLEM]

The negative electrode of a lithium metal battery may expand during charging and discharging. The negative electrode may be deposited non-uniformly during charging and discharging to form lithium dendrites. The expanded negative electrode and/or lithium dendrites may cause cracks in the positive electrode. Cracks in the positive electrode may adversely affect battery performance. Excellent battery performance can be secured only when the expansion of the negative electrode and/or the formation of lithium dendrites is suppressed, or when no cracks are caused in the positive electrode even if the negative electrode expands or lithium dendrites are formed.

### [SOLUTION TO PROBLEM]

An embodiment of the present invention is a battery separator comprising: a substrate layer; a first inorganic layer disposed on one surface of the substrate layer and comprising first inorganic particles; a second inorganic layer disposed on the other surface of the substrate layer and comprising second inorganic particles; and a first electrolyte layer disposed on one surface of the first inorganic layer and comprising a first electrolyte composition, wherein the first inorganic particles comprise flame-retardant inorganic particles, and the second inorganic particles comprise lithium-ion-transferring inorganic particles.

The first inorganic particles may comprise SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, Al₂O₃, AlOOH, Al(OH)₃, TiO₂, or a combination thereof.

D50 (nm) of the first inorganic particles and D50 (nm) of the second inorganic particles may each independently be in a range of 100 to 1000.

The true density (g/cm³) of the first inorganic particles may be smaller than the true density (g/cm³) of the second inorganic particles.

The second inorganic particles may comprise LiₓTi_{y}(PO₄)₃ (0<x<2, 0<y<3), LiₓAl_{y}Ti_{z}(PO₄)₃ (0<x<2, 0<y<1, 0<z<3), LiₓLa_{y}TiO₃ (0<x<2, 0<y<3), Li₆₊ₓLa₃Zr_{2-y}M_{y}O_{12-z} (0≤x≤1, 0≤y≤0.5, 0≤z≤0.2), or a combination thereof.

The second inorganic particles may comprise a garnet-type crystal structure.

The second inorganic particles may comprise Li₆₊ₓLa₃Zr_{2-y}M_{y}O_{12-z} (0≤x≤1, 0≤y≤0.5, 0≤z≤0.2).

The substrate layer may comprise a polyolefin-based film.

The first electrolyte composition may comprise a first binder, a first liquid electrolyte, and a first crosslinking agent.

The first binder may comprise a first unit of vinylidene fluoride and a second unit of a fluorine-containing alkyl vinyl compound.

The weight average molecular weight (g/mol) of the binder may be in a range of 150,000 to 600,000, and the content (wt%) of the second unit of the binder may be in a range of 10 to 25.

The first liquid electrolyte may comprise a non-aqueous solvent, a lithium salt, and an additive.

The non-aqueous solvent may comprise a carbonate-based compound.

The first electrolyte layer may comprise a linear carbonate-based compound in a volume larger than that of a cyclic carbonate-based compound.

The linear carbonate-based compound may comprise dimethyl carbonate, diethyl carbonate, dipropyl carbonate, methylpropyl carbonate, ethylpropyl carbonate, ethylmethyl carbonate, or a combination thereof.

The linear carbonate-based compound may be a liquid at room temperature.

The cyclic carbonate-based compound may comprise vinylethylene carbonate, vinylene carbonate, ethylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, propylene carbonate, butylene carbonate, or a combination thereof.

The cyclic carbonate-based compound may be a solid at room temperature.

The volume (vol%) of the linear carbonate-based compound in the first electrolyte layer may be in a range of 55 to 95.

The first crosslinking agent may comprise a first-1 crosslinking agent and a first-2 crosslinking agent having different numbers of crosslinkable functional groups, and the number of crosslinkable functional groups of the first-1 crosslinking agent may be greater than the number of crosslinkable functional groups of the first-2 crosslinking agent.

The number of crosslinkable functional groups of the first-1 crosslinking agent may be 3 or more.

The first-1 crosslinking agent may comprise a tri(meth)acrylate-based compound, a tetra(meth)acrylate-based compound, a penta(meth)acrylate-based compound, a hexa(meth)acrylate-based compound, or a combination thereof.

The first-1 crosslinking agent may comprise a monomeric compound.

The first-1 crosslinking agent may comprise trimethylolethane tri(meth)acrylate, trimethylolpropane tri(meth)acrylate, ethoxylated trimethylolpropane tri(meth)acrylate, propoxylated trimethylolpropane tri(meth)acrylate, glycerol tri(meth)acrylate, ethoxylated glycerol tri(meth)acrylate, propoxylated glycerol tri(meth)acrylate, tris(2-hydroxyethyl)isocyanurate tri(meth)acrylate, pentaerythritol tetra(meth)acrylate, ethoxylated pentaerythritol tetra(meth)acrylate, propoxylated pentaerythritol tetra(meth)acrylate, erythritol tetra(meth)acrylate, ditrimethylolpropane tetra(meth)acrylate, dipentaerythritol penta(meth)acrylate, ethoxylated dipentaerythritol penta(meth)acrylate, sorbitol penta(meth)acrylate, dipentaerythritol hexa(meth)acrylate, ethoxylated dipentaerythritol hexa(meth)acrylate, sorbitol hexa(meth)acrylate, or a combination thereof.

The number of functional groups of the first-2 crosslinking agent may be 2.

The first-2 crosslinking agent may comprise a di(meth)acrylate-based compound.

The first-2 crosslinking agent may comprise a polymeric compound.

The first-2 crosslinking agent may comprise polyethylene glycol di(meth)acrylate, poly(ethylene oxide-propylene oxide) di(meth)acrylate, polyurethane di(meth)acrylate, polycarbonate di(meth)acrylate, or a combination thereof.

A ratio (C1-1:C1-2) of the weight (C1-1) of the first-1 crosslinking agent in the first electrolyte layer to the weight (C1-2) of the first-2 crosslinking agent in the first electrolyte layer may be in a range of 1:9 to 9:1.

The battery separator may further comprise a second electrolyte layer disposed on the other surface of the substrate layer and comprising a second electrolyte composition.

Another embodiment of the present invention is a battery comprising a positive electrode, a negative electrode, and a separator disposed between the positive electrode and the negative electrode, wherein the separator comprises a substrate layer; a first inorganic layer disposed on one surface of the substrate layer and comprising first inorganic particles; a second inorganic layer disposed on the other surface of the substrate layer and comprising second inorganic particles; and a first electrolyte layer disposed on one surface of the first inorganic layer and comprising a first electrolyte composition, the first inorganic particles comprise flame-retardant inorganic particles, and the second inorganic particles comprise lithium-ion-transferring inorganic particles.

The negative electrode may comprise lithium metal, and the first electrolyte layer may be disposed adjacent to the positive electrode.

The separator may further comprise a second electrolyte layer disposed on the other surface of the substrate layer and comprising a second electrolyte composition, the negative electrode may comprise lithium metal, the first electrolyte layer may be disposed adjacent to the positive electrode, and the second electrolyte layer may be disposed adjacent to the negative electrode.

### [ADVANTAGEOUS EFFECTS OF INVENTION]

The battery separator of the present invention can have a charge carrier (e.g., lithium ion)-transferring property on one surface and high elasticity on the other surface.

The battery of the present invention can protect the positive electrode and at the same time exhibit excellent electrical performance.

### [BEST MODE]

This document may use ordinal numbers such as "first" and "second" to refer to a plurality of components. Here, there is no order of priority among the respective components.

In the present document, when a specific commercial product is used as a certain component, the properties of that component may refer to the properties stated in the technical data sheet (TDS) or certification of analysis (COA) of that product.

In the present document, when the physical properties of a specific material vary depending on temperature and pressure, the measurement standard for the physical properties may be at room temperature (25 °C) and atmospheric pressure (101.325 kPa). This is in accordance with the SATP (Standard Ambient Temperature and Pressure) defined in the CRC Handbook of Chemistry and Physics.

In the present document, the numerical range "within the range of A to B" means "A or more and B or less."

Numerical values mentioned in the present document are rounded values. For example, 1.5 is a number within the range of 1.45 to 1.54.

Hereinafter, the present document describes the present invention in more detail.

An embodiment of the present invention is a battery separator.

In the present document, a battery may include any device that performs an electrochemical reaction.

The battery may refer to any type of primary battery, secondary battery, fuel battery, solar battery, or capacitor. The battery may refer to a lithium secondary battery. The lithium secondary battery may include a lithium metal secondary battery, a lithium polymer secondary battery, a lithium ion polymer secondary battery, or a lithium ion secondary battery.

The battery separator may be disposed between electrodes in the battery. The battery separator may be disposed between the positive electrode and the negative electrode in the battery. The battery separator can prevent physical contact (short-circuiting) between the positive electrode and the negative electrode in the battery. A charge carrier (e.g., lithium ion) can move between the electrodes through the battery separator.

The battery separator of the present invention comprises a substrate layer; an inorganic layer; and a first electrolyte layer. The separator may further comprise a second electrolyte layer. The second electrolyte layer is described later.

The substrate layer can allow a fluid to move from one surface of the substrate layer to the other surface.

The inorganic layer comprises inorganic particles. The inorganic particles can impart predetermined properties to the battery separator. For example, the inorganic particles can impart lithium-ion-transferring performance and/or thermal properties (heat resistance, flame retardancy, etc.) to the battery separator.

The first electrolyte layer can provide a path through which charge carriers can move in the battery separator.

The inorganic layer comprises a plurality of inorganic layers comprising different inorganic particles. The inorganic layer comprises a first inorganic layer and a second inorganic layer. The first inorganic layer comprises first inorganic particles. The second inorganic layer comprises second inorganic particles. The first inorganic particles and the second inorganic particles exhibit different properties.

The first inorganic layer is disposed on one surface of the substrate layer. The second inorganic layer is disposed on the other surface facing the one surface of the substrate layer. Specifically, the first inorganic layer may be disposed on a first surface of the substrate layer, and the second inorganic layer may be disposed on a second surface facing the first surface of the substrate layer. The thicknesses of the first inorganic layer and the second inorganic layer may be the same as or different from each other.

The first electrolyte layer is disposed on one surface of the first inorganic layer. That is, the first electrolyte layer is disposed on one surface of the substrate layer, and the first inorganic layer is disposed between the substrate layer and the first electrolyte layer.

The electrolyte layer comprises an electrolyte composition. The composition included in the first electrolyte layer is a first electrolyte composition. The composition included in the second electrolyte layer is a second electrolyte composition. The electrolyte composition may be a composition of a gel polymer electrolyte.

In the present document, a gel polymer electrolyte is a gel-phase electrolyte and comprises a polymer matrix and a liquid electrolyte impregnated therein. Here, the polymer matrix can physically support the gel polymer electrolyte. The liquid electrolyte can impart ionic conductivity to the gel polymer electrolyte.

In the present document, the electrolyte composition refers to a composition that can become an electrolyte by itself or by a predetermined reaction.

The first inorganic particles comprise flame-retardant inorganic particles.

The flame-retardant inorganic particles can add flame-retardant properties to the battery separator and prevent a sharp rise in the internal temperature of the battery.

The second inorganic particles comprise lithium-ion-transferring inorganic particles.

The lithium-ion-transferring inorganic particles can include lithium but exhibit a function of moving lithium ions without storing lithium. There may be a kind of defect inside the lithium-ion-transferring inorganic particles. Charge carriers such as lithium ions can move using the defects. Therefore, the lithium-ion-transferring inorganic particles can improve the lithium ion conductivity in the battery. As a result, the performance of the battery can also be improved.

The battery separator of the present invention can alleviate the volume expansion of the electrode by disposing the flame-retardant inorganic particles adjacent to the electrolyte layer, and reduce side reactions with the electrode by disposing the lithium-ion-transferring inorganic particles on the opposite side.

Without being bound by theory, it is thought that the arrangement of the inorganic particles can reduce damage caused by the volume expansion of the adjacent electrode, and additionally, the lithium-ion-transferring inorganic particles can reduce side reactions with the electrode, so that disposing non-lithium-ion-transferring inorganic particles on one side and lithium-ion-transferring inorganic particles on the opposite side can effectively reduce the deterioration of the battery due to electrode volume expansion and side reactions.

Thus, the battery separator of the present invention, in which two inorganic layers having opposite properties are disposed to face each other across the substrate layer, may be particularly suitable for batteries in which the positive electrode and the negative electrode require opposite properties.

For example, the negative electrode of a lithium metal battery comprising lithium metal as the negative electrode may expand during charging and discharging to cause cracks in the positive electrode. Here, the first inorganic layer of the battery separator of the present invention may be disposed on the positive electrode side, and the second inorganic layer may be disposed on the negative electrode side. The generation of lithium dendrites can be suppressed by the second inorganic layer, and even if generated, cracks in the positive electrode can be reduced by the first inorganic layer.

Without being bound by theory, it is thought that the arrangement of the inorganic particles can reduce damage caused by the volume expansion of the negative electrode, and additionally, the lithium-ion-transferring inorganic particles can reduce side reactions with the negative electrode, so that disposing non-lithium-ion-transferring inorganic particles on the surface facing the positive electrode and lithium-ion-transferring inorganic particles on the surface facing the negative electrode can prevent damage to the positive electrode due to volume expansion of the negative electrode and effectively reduce the deterioration of the battery due to side reactions with the negative electrode.

Hereinafter, the present document describes the battery separator in more detail.

The first inorganic particles may comprise SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, Al₂O₃, AlOOH, Al(OH)₃, TiO₂, or a combination thereof. Preferably, the first inorganic particles may comprise ZrO₂, Y₂O₃, Al₂O₃, AlOOH, Al(OH)₃, TiO₂, or a combination thereof. More preferably, the first inorganic particles may comprise Al₂O₃, AlOOH, Al(OH)₃, TiO₂, or a combination thereof.

D50 (nm) of the first inorganic particles and D50 (nm) of the second inorganic particles may each independently be in a range of 100 to 1000.

Specifically, D50 (nm) of the first inorganic particles and D50 (nm) of the second inorganic particles may each independently be 150 or more, 200 or more, 250 or more, 300 or more, 350 or more, 400 or more, 450 or more, or 500 or more. D50 (nm) of the first inorganic particles and D50 (nm) of the second inorganic particles may each independently be 950 or less, 900 or less, 850 or less, 800 or less, 750 or less, 700 or less, 650 or less, 600 or less, 550 or less, or 500 or less.

The true density of the first inorganic particles may be smaller than the true density of the second inorganic particles. The inorganic particles can improve the mechanical and thermal properties of the battery separator by imparting rigidity and heat resistance thereto. When the battery separator comprises a plurality of inorganic particles having different densities, the heavier particles can form a skeleton at the bottom, and the lighter particles can fill the upper portion or the gaps formed by the heavier particles, and during this process, a uniform pore structure can be formed inside the battery separator. The uniform pore structure can enhance the electrolyte solution impregnability and ionic conductivity of the battery separator.

In the present document, a uniform pore structure may refer to a structure in which the average size, shape, density, etc. of the pores are almost constant regardless of the position of the layer, so that the path of substance movement therein can be maintained constant. A uniform pore structure may refer to a state in which the size distribution and spatial distribution variation of the pores are small throughout the battery separator including the pores, the pores are continuously connected to each other, and the pores are not localized in a specific direction or position.

In the present document, the true density of a particle may refer to the density calculated only from the mass and volume of the particle itself excluding the void inside the particle. The true density of the inorganic particles may be a value known for the corresponding inorganic particles or a value measured according to a known method. The true density of the inorganic particles may be determined according to the chemical composition of the corresponding inorganic particles.

The true density (g/cm³) of the first inorganic particles may be in a range of 1.5 to 6. Specifically, the true density (g/cm³) of the first inorganic particles may be 2.0 or more, 2.5 or more, 3.0 or more, 3.5 or more, or 3.95 or more. The true density (g/cm³) of the first inorganic particles may be 5.5 or less, 5.0 or less, 4.5 or less, 4.0 or less, 3.95 or less, or 3.5 or less.

The true density (g/cm³) of the second inorganic particles may be in a range of 2.5 to 10. The true density (g/cm³) of the second inorganic particles may be 3.0 or more, 3.5 or more, 4.0 or more, 4.5 or more, 5.0 or more, 5.4 or more, 5.5 or more, 6.0 or more, or 6.5 or more. The true density (g/cm³) of the second inorganic particles may be 9.5 or less, 9.0 or less, 8.5 or less, 8.0 or less, 7.5 or less, 7.0 or less, 6.5 or less, or 6.0 or less.

The second inorganic particles may comprise LiₓTi_{y}(PO₄)₃ (0<x<2, 0<y<3), LiₓAl_{y}Ti_{z}(PO₄)₃ (0<x<2, 0<y<1, 0<z<3), LiₓLa_{y}TiO₃ (0<x<2, 0<y<3), Li₆₊ₓLa₃Zr_{2-y}M_{y}O_{12-z} (0≤x≤1, 0≤y≤0.5, 0≤z≤0.2), or a combination thereof. Preferably, the second inorganic particles may comprise Li₆₊ₓLa₃Zr_{2-y}M_{y}O_{12-z} (0≤x≤1, 0≤y≤0.5, 0≤z≤0.2).

The second inorganic particles may comprise a garnet-type crystal structure.

The garnet-type crystal structure may have a cubic structure. The garnet-type crystal structure may have a structure of A₃B₅O₁₂ form or A₃B₂(SiO₄)₃ form. A may comprise divalent, trivalent, or tetravalent ions of La, Ca, or Y. B may comprise tetravalent ions of Zr or Al. Thereby, the garnet-type crystal structure can form a stable structure.

Li₆₊ₓLa₃Zr_{2-y}M_{y}O_{12-z} (0≤x≤1, 0≤y≤0.5, 0≤z≤0.2) is referred to as an LLZO-based compound, and is a representative compound having a garnet-type crystal structure. The garnet-type crystal structure may include, in addition to the LLZO-based compound, Li₅La₃Nb₂O₁₂, Li₆CaLa₂Nb₂O₁₂, Li₅La₃Ta₂O₁₂, Li₅La₃M₂O₁₂ (M = Nb, Ta, Sb, etc.), and the like.

The garnet-type crystal structure may be advantageous in providing a path for the movement of lithium ions, exhibiting high ionic conductivity, excellent high-temperature thermal stability, and low chemical reactivity. By having the second inorganic particles having a garnet-type crystal structure, the capacity properties and stability of a battery comprising the second inorganic particles can be improved.

The first inorganic layer may comprise only the first inorganic particles as inorganic particles. In addition, the second inorganic layer may comprise only the second inorganic particles as inorganic particles. That is, the inorganic particles of each of the first inorganic layer and the second inorganic layer may consist of the first inorganic particles and the second inorganic particles. For example, the first inorganic layer and the second inorganic layer may each independently not comprise a combination of the first inorganic particles and the second inorganic particles.

The substrate layer may comprise a polyolefin-based film. Specifically, the substrate layer may comprise a porous polyolefin-based film.

Here, the polyolefin-based porous film refers to a porous film containing a polyolefin-based resin as a main component.

The polyolefin-based porous film may comprise the polyolefin-based resin in an amount of 50 vol% or more, 90 vol% or more, or 95 vol% or more of the entire material constituting the polyolefin-based porous film.

The weight average molecular weight of the component included in the polyolefin-based resin may be 3×10⁵ to 15×10⁶. When the weight average molecular weight of the component included in the polyolefin-based resin is 1,000,000 or more, the strength of the separator including the polyolefin porous film can be improved.

The polyolefin-based resin may comprise a thermoplastic resin. The thermoplastic resin may comprise a homopolymer formed by polymerization of monomers such as ethylene, propylene, 1-butene, 4-methyl-1-pentene, 1-hexene (e.g., polyethylene, polypropylene, polybutene), or a copolymer (e.g., ethylene-propylene copolymer).

The polyolefin-based porous film may be a layer comprising one of these polyolefin-based resins alone, or a layer comprising two or more of these polyolefin-based resins. Among them, polyethylene and high-molecular-weight polyethylene having ethylene as a main backbone can block the flow of excessive current (shut down) at a lower temperature. In addition, the polyolefin-based porous film may further comprise components other than the polyolefin-based resin that do not impair the function of the film.

The first electrolyte composition may comprise a first binder, a first liquid electrolyte, and a first crosslinking agent.

The first binder, alone or together with the first crosslinking agent, may form a polymer matrix.

The first liquid electrolyte may be impregnated in the polymer matrix formed by the first binder. The first liquid electrolyte can impart ionic conductivity to the gel polymer electrolyte.

The first crosslinking agent, as a crosslinking agent alone or together with the first binder, may form a polymer matrix in the gel polymer electrolyte. The first crosslinking agent may connect the first binders and/or the first crosslinking agents in the polymer matrix.

The first binder may form a backbone in the first electrolyte layer formed by the first electrolyte composition. The first binder may have appropriate crystallinity and polarity to enhance the ionic conductivity of the battery separator. In particular, the polar portion of the first binder may bond with the first crosslinking agent. In this case, the first binder may form a crosslinked structure in the first electrolyte layer.

The first binder may comprise a fluorine-based binder. The fluorine-based binder may refer to a binder whose constituent units include fluorine in part or in whole. The fluorine-based binder may comprise a PVDF-based binder.

The PVDF-based binder may be a homopolymer or copolymer comprising a polymerization unit derived from vinylidene fluoride. The fluorine-based binder may comprise a first unit of vinylidene fluoride and a second unit of a fluorine-containing alkyl vinyl compound. The PVDF-based binder may be a block copolymer or random copolymer comprising the first unit and the second unit. Preferably, the PVDF-based binder may be a random copolymer comprising the first unit and the second unit.

The fluorine-containing alkyl vinyl compound may refer to a compound in which at least one fluorine-containing alkyl group represented by CₙH_{(2n+1-y})F_{y} is bonded to a vinyl group. However, vinylidene fluoride is excluded.

The fluorine-containing alkyl vinyl compound may comprise at least one selected from the group consisting of vinyl fluoride, trifluoroethylene, tetrafluoroethylene, chlorotrifluoroethylene, and hexafluoropropylene. Preferably, the fluorine-containing alkyl vinyl compound may comprise at least one selected from the group consisting of hexafluoropropylene, tetrafluoroethylene, and chlorotrifluoroethylene. More preferably, the fluorine-containing alkyl vinyl compound may comprise hexafluoropropylene.

The content of the second unit of the fluorine-based binder may be adjusted. The content of the second unit of the fluorine-based binder may affect the crystallinity of the fluorine-based binder, the ionic conductivity, and mechanical strength of the battery separator.

The content (wt%) of the second unit of the fluorine-based binder may be in a range of 10 to 25. Preferably, the content (wt%) of the second unit of the fluorine-based binder may be 15 or more, 16 or more, 17 or more, or 18 or more. The content (wt%) of the second unit of the fluorine-based binder may be 23 or less, 21 or less, 20 or less, or 19 or less.

The content of the first unit and the second unit of the fluorine-based binder may be measured by ¹⁹F-NMR analysis of the fluorine-based binder.

The weight average molecular weight of the fluorine-based binder may also be adjusted. The weight average molecular weight (g/mol) of the fluorine-based binder may be in a range of 150,000 to 600,000. Preferably, the weight average molecular weight (g/mol) of the fluorine-based binder may be 200,000 or more, 250,000 or more, 300,000 or more, or 350,000 or more. The weight average molecular weight (g/mol) of the fluorine-based binder may be 550,000 or less, 500,000 or less, 450,000 or less, 400,000 or less, or 350,000 or less.

The weight average molecular weight of the fluorine-based binder may be measured by gel permeation chromatography.

The melting point of the fluorine-based binder may also be adjusted. The melting point (°C) of the fluorine-based binder may be in a range of 100 to 140. Preferably, the melting point (°C) of the fluorine-based binder may be 110 or more, or 115 or more. The melting point (°C) of the fluorine-based binder may be 135 or less, 130 or less, or 125 or less.

The first liquid electrolyte may be impregnated in the first binder, specifically in the polymer matrix formed by the first binder. The first liquid electrolyte may further comprise a non-aqueous solvent, a lithium salt, and an additive.

The non-aqueous solvent may refer to an organic solvent that does not contain water or contains water only in a trace amount. The non-aqueous solvent may comprise a carbonate-based compound, an ether-based compound, an ester-based compound, a polar functional group-containing compound, or a mixture thereof. Preferably, the non-aqueous solvent may comprise a carbonate-based compound.

The ether-based compound may comprise dimethoxyethane, diethoxyethane, tetrahydrofuran, or a combination thereof.

The ester-based compound may comprise N-methyl-2-pyrrolidone (NMP), gamma-butyrolactone (γ-butyrolactone), or a combination thereof.

The polar functional group-containing compound may comprise dimethyl sulfoxide, acetonitrilo, or a combination thereof.

The carbonate-based compound may comprise a linear carbonate-based compound, a cyclic carbonate-based compound, or a combination thereof. Preferably, the carbonate-based compound may comprise a linear carbonate-based compound and a cyclic carbonate-based compound.

The first electrolyte layer may comprise a linear carbonate-based compound in a volume larger than that of a cyclic carbonate-based compound. In this case, the miscibility of the binder with the liquid electrolyte is increased, and abnormal viscosity rise of the first electrolyte composition can be prevented.

The volume of the carbonate-based compound in the electrolyte layer may be adjusted by the volume of the carbonate-based compound in the electrolyte composition.

In the present document, a linear carbonate-based compound refers to an open-chain double ester of carbonic acid. Specifically, a linear carbonate-based compound includes a structure in which the two hydroxyl groups of carbonic acid are esterified with different alcohols and the entire molecule does not form a ring.

In the present document, a cyclic carbonate-based compound refers to an internal ester in which the -O-CO-O- skeleton of the carbonate group is included in a ring structure. Specifically, a cyclic carbonate-based compound includes a structure in which both ends of two hydroxyl groups in one molecule form ester bonds with the same carbonate group, and the -O-CO-O- skeleton is included in a ring.

The linear carbonate-based compound may comprise dimethyl carbonate, diethyl carbonate, dipropyl carbonate, methylpropyl carbonate, ethylpropyl carbonate, ethylmethyl carbonate, or a combination thereof.

Specifically, the linear carbonate-based compound may comprise dimethyl carbonate, diethyl carbonate, ethylmethyl carbonate, or a combination thereof.

More specifically, the linear carbonate-based compound may comprise ethylmethyl carbonate.

The linear carbonate-based compound may be a liquid at room temperature.

The cyclic carbonate-based compound may comprise vinylethylene carbonate, vinylene carbonate, ethylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, propylene carbonate, butylene carbonate, or a combination thereof.

Specifically, the cyclic carbonate-based compound may comprise vinylethylene carbonate, vinylene carbonate, ethylene carbonate, fluoroethylene carbonate, propylene carbonate, butylene carbonate, or a combination thereof.

More specifically, the cyclic carbonate-based compound may comprise vinylethylene carbonate, vinylene carbonate, ethylene carbonate, propylene carbonate, or a combination thereof.

From the viewpoint of the miscibility of the aforementioned first binder and the first liquid electrolyte, the viscosity adjustment of the first electrolyte composition, and the safety of the battery, it may be preferable that the linear carbonate-based compound and the cyclic carbonate-based compound are combined in different phases.

The cyclic carbonate-based compound may be a solid at room temperature. Specifically, the cyclic carbonate-based compound may comprise ethylene carbonate.

The amounts of the linear carbonate-based compound and the cyclic carbonate-based compound used may also be appropriately adjusted within the range satisfying the above conditions.

The volume (vol%) of the linear carbonate-based compound in the first electrolyte layer may be in a range of 55 to 95.

Preferably, the volume (vol%) of the linear carbonate-based compound in the first electrolyte layer may be 60 or more, 65 or more, or 70 or more. The volume (vol%) of the linear carbonate-based compound in the first electrolyte layer may be 90 or less, 85 or less, 80 or less, or 75 or less.

The volume (vol%) of the cyclic carbonate-based compound in the first electrolyte layer may be in a range of 5 to 45. Preferably, the volume (vol%) of the cyclic carbonate-based compound in the first electrolyte layer may be 10 or more, 15 or more, 20 or more, or 25 or more. The volume (vol%) of the cyclic carbonate-based compound in the first electrolyte layer may be 40 or less, 35 or less, or 30 or less.

The lithium salt may be dissolved in the non-aqueous solvent. The lithium salt may refer to a material that decomposes into lithium cations and anions upon dissociation.

The lithium salt may comprise LiPF₆, LiBF₄, LiCl, LiBr, LiI, LiClO₄, LiAsF₆, LiCH₃CO₂, LiCF₃SO₃, LiN(CF₃SO₂)₂, LiN(FSO₂)₂, LiC(CF₂SO₂)₃, or a combination thereof. Preferably, the lithium salt may comprise LiN(CF₃SO₂)₂.

The additive may refer to a substance applied in a small amount to the liquid electrolyte for stabilizing the electrode interface, improving electrochemical stability, adjusting conduction properties, improving temperature properties, suppressing gas generation, and the like.

The additive may comprise vinylene carbonate, 1,3-propane sultone, 1,3-propene sultone, lithium difluorophosphate, lithium tetrafluoro(oxalato)phosphate, lithium bis(fluorosulfonyl)imide, fluoroethylene carbonate, vinyl ethylene carbonate, or a combination thereof. Preferably, the additive may comprise vinylene carbonate.

Since the first liquid electrolyte is impregnated in the first binder or the polymer matrix formed by the first binder in the first electrolyte layer, the thickness of the first electrolyte layer may be generally thick. Specifically, the first electrolyte layer may be thicker than the substrate layer.

The first crosslinking agent comprises a plurality of crosslinking agent species. Specifically, the first crosslinking agent may comprise a first-1 crosslinking agent and a first-2 crosslinking agent having different numbers of crosslinkable functional groups. The number of crosslinkable functional groups of the first-1 crosslinking agent may be greater than the number of crosslinkable functional groups of the first-2 crosslinking agent. Here, the number of crosslinkable functional groups of a crosslinking agent may refer to the number of crosslinkable functional groups per molecule of the crosslinking agent. The crosslinkable functional groups may be functional groups that act to connect the binders and/or the crosslinking agents in the polymer matrix.

When the first electrolyte composition comprises a plurality of crosslinking agents having different numbers of crosslinkable functional groups, the first electrolyte layer can be made at a fast crosslinking rate, and can exhibit high crosslinking density and appropriate flexibility.

Without being bound by theory, it is thought that the excellent properties of the electrolyte layer such as the crosslinking rate, crosslinking density, and flexibility are due to the fact that the first-1 crosslinking agent can form a dense crosslinked structure, and the first-2 crosslinking agent can provide a space in which the liquid electrolyte can be impregnated.

The number of crosslinkable functional groups of the first-1 crosslinking agent may be 3 or more. In this case, the first-1 crosslinking agent can form a dense crosslinked structure. Specifically, the number of crosslinkable functional groups of the first-1 crosslinking agent may be 6 or less, 5 or less, or 4 or less.

The crosslinkable functional groups may comprise photoreactive functional groups. Specifically, the crosslinkable functional groups may comprise (meth)acryloyl groups as photoreactive functional groups. The first-1 crosslinking agent and the first-2 crosslinking agent may comprise multifunctional (meth)acrylate-based compounds. Preferably, from the viewpoint of the rate of crosslinking reaction and prevention of deterioration of electrochemical properties due to the rigidity of the polymer network, the crosslinkable functional groups may comprise acryloyl groups as photoreactive functional groups.

Therefore, the first-1 crosslinking agent may comprise a tri(meth)acrylate-based compound, a tetra(meth)acrylate-based compound, a penta(meth)acrylate-based compound, a hexa(meth)acrylate-based compound, or a combination thereof.

Specifically, the first-1 crosslinking agent may comprise a triacrylate-based compound, a tetraacrylate-based compound, a pentaacrylate-based compound, a hexaacrylate-based compound, or a combination thereof.

More specifically, the first-1 crosslinking agent may comprise a triacrylate-based compound, a tetraacrylate-based compound, or a combination thereof.

Even more specifically, the first-1 crosslinking agent may comprise a triacrylate-based compound.

The first-1 crosslinking agent may comprise a monomeric compound. The monomeric crosslinking agent may mean that the remaining moiety excluding the crosslinkable functional group is derived from a monomer.

The first-1 crosslinking agent may comprise trimethylolethane tri(meth)acrylate, trimethylolpropane tri(meth)acrylate, ethoxylated trimethylolpropane tri(meth)acrylate, propoxylated trimethylolpropane tri(meth)acrylate, glycerol tri(meth)acrylate, ethoxylated glycerol tri(meth)acrylate, propoxylated glycerol tri(meth)acrylate, tris(2-hydroxyethyl)isocyanurate tri(meth)acrylate, pentaerythritol tetra(meth)acrylate, ethoxylated pentaerythritol tetra(meth)acrylate, propoxylated pentaerythritol tetra(meth)acrylate, erythritol tetra(meth)acrylate, ditrimethylolpropane tetra(meth)acrylate, dipentaerythritol penta(meth)acrylate, ethoxylated dipentaerythritol penta(meth)acrylate, sorbitol penta(meth)acrylate, dipentaerythritol hexa(meth)acrylate, ethoxylated dipentaerythritol hexa(meth)acrylate, sorbitol hexa(meth)acrylate, or a combination thereof.

Specifically, the first-1 crosslinking agent may comprise trimethylolethane triacrylate, trimethylolpropane triacrylate, ethoxylated trimethylolpropane triacrylate, propoxylated trimethylolpropane triacrylate, glycerol triacrylate, ethoxylated glycerol triacrylate, propoxylated glycerol triacrylate, tris(2-hydroxyethyl)isocyanurate triacrylate, pentaerythritol tetraacrylate, ethoxylated pentaerythritol tetraacrylate, propoxylated pentaerythritol tetraacrylate, erythritol tetraacrylate, ditrimethylolpropane tetraacrylate, dipentaerythritol pentaacrylate, ethoxylated dipentaerythritol pentaacrylate, sorbitol pentaacrylate, dipentaerythritol hexaacrylate, ethoxylated dipentaerythritol hexaacrylate, sorbitol hexaacrylate, or a combination thereof.

More specifically, the first-1 crosslinking agent may comprise trimethylolethane triacrylate, trimethylolpropane triacrylate, ethoxylated trimethylolpropane triacrylate, propoxylated trimethylolpropane triacrylate, glycerol triacrylate, ethoxylated glycerol triacrylate, propoxylated glycerol triacrylate, tris(2-hydroxyethyl)isocyanurate triacrylate, pentaerythritol tetraacrylate, ethoxylated pentaerythritol tetraacrylate, propoxylated pentaerythritol tetraacrylate, erythritol tetraacrylate, ditrimethylolpropane tetraacrylate, or a combination thereof.

Even more specifically, the first-1 crosslinking agent may comprise trimethylolethane triacrylate, trimethylolpropane triacrylate, ethoxylated trimethylolpropane triacrylate, propoxylated trimethylolpropane triacrylate, glycerol triacrylate, ethoxylated glycerol triacrylate, propoxylated glycerol triacrylate, tris(2-hydroxyethyl)isocyanurate triacrylate, or a combination thereof.

The number of crosslinkable functional groups of the first-2 crosslinking agent may be smaller than the number of crosslinkable functional groups of the first-1 crosslinking agent. If the number of crosslinkable functional groups of the first-1 crosslinking agent is 3, the number of crosslinkable functional groups of the first-2 crosslinking agent may be 2. If the number of crosslinkable functional groups of the first-1 crosslinking agent is 4, the number of crosslinkable functional groups of the first-2 crosslinking agent may be 2 or 3. If the number of crosslinkable functional groups of the first-1 crosslinking agent is 5, the number of crosslinkable functional groups of the first-2 crosslinking agent may be 2, 3, or 4. If the number of crosslinkable functional groups of the first-1 crosslinking agent is 6, the number of crosslinkable functional groups of the first-2 crosslinking agent may be 2, 3, 4, or 5.

Specifically, regardless of the number of crosslinkable functional groups of the first-1 crosslinking agent, the number of crosslinkable functional groups of the first-2 crosslinking agent may be 2. When the number of crosslinkable functional groups of the first-2 crosslinking agent is as small as possible, the first-2 crosslinking agent can provide a space in which the liquid electrolyte can be impregnated.

Since the crosslinking agent may comprise photoreactive functional groups, specifically (meth)acryloyl groups, and the number of functional groups of the first-2 crosslinking agent may be 2, the first-2 crosslinking agent may comprise a di(meth)acrylate-based compound.

In addition, since it is preferable that the photoreactive functional group comprises an acryloyl group, the first-2 crosslinking agent may comprise a diacrylate-based compound.

The first-2 crosslinking agent may comprise a polymeric compound. The polymeric crosslinking agent may mean that the remaining moiety excluding the crosslinkable functional group is derived from a polymer.

Preferably, the first-1 crosslinking agent may comprise a monomeric compound, and the first-2 crosslinking agent may comprise a polymeric compound. That is, when the crosslinking agent with a larger number of functional groups is monomeric and the crosslinking agent with a smaller number of functional groups is polymeric, the excellent properties of the electrolyte layer such as the crosslinking rate, crosslinking density, and flexibility can be more appropriately exhibited.

The first-2 crosslinking agent may comprise polyethylene glycol di(meth)acrylate, poly(ethylene oxide-propylene oxide) di(meth)acrylate, polyurethane di(meth)acrylate, polycarbonate di(meth)acrylate, or a combination thereof.

Specifically, the first-2 crosslinking agent may comprise polyethylene glycol diacrylate, poly(ethylene oxide-propylene oxide) diacrylate, polyurethane diacrylate, polycarbonate diacrylate, or a combination thereof.

More specifically, the first-2 crosslinking agent may comprise polyethylene glycol diacrylate, polyurethane diacrylate, or a combination thereof.

Even more specifically, the first-2 crosslinking agent may comprise polyurethane diacrylate.

When the first-2 crosslinking agent comprises a polymeric compound, the molecular weight of the polymeric compound may also be adjusted. The first-2 crosslinking agent may comprise polyethylene glycol diacrylate having a molecular weight in a range of 400 g/mol to 700 g/mol, polyurethane diacrylate having a molecular weight in a range of 1400 g/mol to 2100 g/mol, or a combination thereof. Specifically, the first-2 crosslinking agent may comprise polyurethane diacrylate having a molecular weight in a range of 1400 g/mol to 2100 g/mol.

The blending ratio of the first-1 crosslinking agent and the first-2 crosslinking agent may also be appropriately adjusted.

A ratio (C1-1:C1-2) of the weight (C1-1) of the first-1 crosslinking agent in the first electrolyte layer to the weight (C1-2) of the first-2 crosslinking agent in the first electrolyte layer may be in a range of 1:9 to 9:1.

Preferably, the ratio (C1-1:C1-2) of the weight (C1-1) of the first-1 crosslinking agent in the first electrolyte layer to the weight (C1-2) of the first-2 crosslinking agent in the first electrolyte layer may be 1.5:8.5 or more, 2:8 or more, 2.5:7:5 or more, 3:7 or more, 3.5:6.5 or more, 4:6 or more, or 4.5:5.5 or more. The ratio (C1-1:C1-2) of the weight (C1-1) of the first-1 crosslinking agent in the first electrolyte layer to the weight (C1-2) of the first-2 crosslinking agent in the first electrolyte layer may be 8.5:1.5 or less, 8:2 or less, 7.5:2.5 or less, 7:3 or less, 6.5:3.5 or less, 6:4 or less, or 5.5:4.5 or less.

On the other hand, the first electrolyte layer may comprise the first-1 crosslinking agent in a weight larger than that of the first-2 crosslinking agent. The molecular weight of a crosslinking agent with a smaller number of crosslinkable functional groups is higher than the molecular weight of a crosslinking agent with a larger number of crosslinkable functional groups. For this reason, the number of crosslinks per unit volume or unit mass of a crosslinking agent with a smaller number of crosslinkable functional groups is lower than that of a crosslinking agent with a larger number of crosslinkable functional groups. Therefore, a crosslinking agent with a smaller number of crosslinkable functional groups may be unfavorable for smooth crosslinking progress. As a result, it may be more advantageous for the first electrolyte layer to comprise the first-1 crosslinking agent in a weight larger than that of the first-2 crosslinking agent. In addition, in this case, the elasticity of the battery, specifically the electrolyte layer, more specifically the first electrolyte layer, can be increased.

The weight of the first-1 crosslinking agent in the first electrolyte layer and the weight of the first-2 crosslinking agent in the first electrolyte layer may be adjusted by the weight of the first-1 crosslinking agent in the first electrolyte composition and the weight of the first-2 crosslinking agent in the first electrolyte composition.

The first electrolyte layer may further comprise an initiator. Specifically, the first electrolyte composition may further comprise a first initiator.

The first initiator may initiate a reaction in which the first binder forms a polymer matrix when a predetermined stimulus is applied.

The first initiator may comprise a thermal polymerization initiator, a photopolymerization initiator, or a combination thereof. Preferably, the initiator may comprise a photopolymerization initiator.

The photopolymerization initiator may comprise a short-wavelength photopolymerization initiator, a long-wavelength photopolymerization initiator, or a combination thereof. Preferably, the photopolymerization initiator may comprise a long-wavelength photopolymerization initiator.

The short-wavelength photopolymerization initiator may comprise IRGACURE 127 (1,1'-(Methylene-di-4,1-phenylene)bis[2-hydroxy-2-methyl-1-propanone]), IRGACURE 1173 (2-Hydroxy-2-methylpropiophenone, HMPP), DMPA (2,2-dimethoxy-2-phenylacetonephenone), HOMPP (2-hydroxy-2-methylpropipphenone), LAP (Lithium phenyl-2,4,6-trimethylbenzoylphosphinate), or a combination thereof.

The long-wavelength photopolymerization initiator may comprise at least one selected from the group consisting of Bis(2,4,6-trimethylbenzoyl)-phenylphosphineoxide and Ethyl (2,4,6-trimethylbenzoyl) pheny1phosphinate. Preferably, the long-wavelength photopolymerization initiator may comprise Ethyl (2,4,6-trimethylbenzoyl) pheny1phosphinate (TPO-L).

In addition, the first electrolyte composition may be impregnated in the pores of the substrate layer. Therefore, at least a portion of the first electrolyte layer including the cured product of the first electrolyte composition may be impregnated in the pores of the substrate layer.

The electrolyte layer may be formed by curing the electrolyte composition. The electrolyte layer may comprise a cured product of the electrolyte composition. Specifically, the first electrolyte layer may comprise a cured product of the first electrolyte composition.

The method of curing may include, for example, thermal curing, photo curing, and thermal-photo dual curing. Preferably, the method of curing may be photo curing.

The cured product of a composition may refer to a product that has undergone a chemical process in which the composition becomes harder or solidifies as the structures of the components included in the composition change due to chemical reactions between the components. The curing may be different from drying, which is a physical process in which a part of the composition becomes dry or solidified as some components included in the composition (e.g., solvents such as water, volatile components) evaporate.

A UV curing method may be applied as a method of forming the first electrolyte layer on the substrate layer. The UV curing method is a method of forming a crosslinked structure between binder and binder, between binder and crosslinking agent, or between crosslinking agent and crosslinking agent by an external force. According to the UV curing method, the process of the binder forming a polymer matrix, the dispersion process of the binder and inorganic particles, and the impregnation process of the liquid electrolyte can proceed in the same step.

The UV curing method may include the following steps. The numbers of each step do not refer to the order of the steps:
(1) preparing the electrolyte composition;
(2) applying the electrolyte composition to one or both surfaces of the substrate layer; and
(3) irradiating the electrolyte composition with UV.

In step (1), the preparation of the electrolyte composition may include directly preparing the electrolyte composition or applying a previously prepared electrolyte composition.

The conditions such as the application method and thickness of the electrolyte composition are not particularly limited.

The conditions of the UV irradiated to the electrolyte composition are not particularly limited.

The battery separator of the present invention may further comprise an additional electrolyte layer in addition to the first electrolyte layer. Specifically, the battery separator may further comprise a second electrolyte layer.

The second electrolyte layer may be disposed on the opposite side of the first electrolyte layer. Specifically, the second electrolyte layer may be disposed on the other surface of the substrate layer. The other surface of the substrate layer may face the one surface of the substrate layer.

The second electrolyte layer may comprise the electrolyte composition. The electrolyte composition included in the second electrolyte layer may be a second electrolyte composition.

The second electrolyte composition may have the same or different composition and/or properties as the first electrolyte composition. Therefore, in the description of the second electrolyte composition and the second electrolyte layer, the description of the first electrolyte composition and the first electrolyte layer may be applied as is in the present document.

Another embodiment is the present invention is a battery.

The battery may comprise a first electrode, a second electrode, a separator, and an electrolyte. The separator may be disposed between the first electrode and the second electrode. The polarity of the first electrode may be opposite to the polarity of the second electrode. If the first electrode is the positive electrode (negative electrode), the second electrode may be the negative electrode (positive electrode).

The system constituted by the separator and electrolyte of the battery may be the battery separator of the present invention. Therefore, in the description of the battery, the description of the separator and the electrolyte may be entirely replaced with the battery separator described above.

The positive electrode may be an electrode that undergoes a reduction reaction during discharge. The negative electrode may be an electrode that undergoes an oxidation reaction during discharge.

The electrode of the battery may comprise an electrode active material attached to an electrode current collector. Specifically, the electrode may comprise an electrode current collector and an electrode active material layer disposed on one surface or both surfaces of the electrode current collector and comprising an electrode active material.

The positive electrode active material among the electrode active materials may comprise a lithium intercalation material. The lithium intercalation material may comprise a lithium transition metal oxide. The lithium intercalation material may comprise lithium manganese oxide, lithium cobalt oxide, lithium nickel oxide and lithium iron oxide, lithium nickel-manganese oxide, lithium nickel-cobalt oxide, lithium nickel-manganese-cobalt oxide, or a combination thereof. Preferably, the positive electrode active material may comprise lithium nickel-manganese-cobalt oxide.

The negative electrode active material among the electrode active materials may comprise a lithium intercalation material. The lithium intercalation material may comprise a lithium-based metal comprising lithium metal and a lithium alloy; a carbon-based compound comprising carbon, petroleum coke, activated carbon, and graphite; or a combination thereof.

The positive electrode current collector may be a foil of a metal comprising aluminum, nickel, or a combination thereof. Preferably, the positive electrode current collector may be an aluminum foil.

The negative electrode current collector may be a foil of a metal comprising copper, gold, nickel, or a combination thereof. Preferably, the negative electrode current collector may be a copper foil.

The battery separator of the present invention may be more suitable when the battery is a lithium metal battery. That is, the negative electrode may comprise lithium metal. Specifically, the negative electrode may comprise copper as the negative electrode current collector and may comprise lithium metal as the negative electrode active material. In particular, the negative electrode may comprise lithium metal as a main component (e.g., a content of 90 wt% or more) as the negative electrode active material.

In this case, the first electrolyte layer may be disposed adjacent to the positive electrode.

As described above, the battery separator of the present invention may further comprise a second electrolyte layer disposed on the other surface of the substrate layer. The second electrolyte layer may comprise a second electrolyte composition.

In this case, the first electrolyte layer may be disposed adjacent to the positive electrode. The second electrolyte layer may be disposed adjacent to the negative electrode.

Accordingly, the problems caused by the expansion of the negative electrode that occurs during charging and discharging of the lithium metal battery can be reduced, and the performance of the battery can be improved.

### [MODE FOR INVENTION]

Hereinafter, the present document describes the present invention in more detail with Examples and Comparative Examples. However, the present document does not limit the present invention to the Examples.

### Example 1. Battery separator

(1) Dispersing 10 g of first inorganic particles in 20 g of water to prepare a dispersion. The first inorganic particles are ALK-L1 from Daehan Ceramics (Al₂O₃; D50: 300 nm; true density: 3.95 g/cm³).
(2) Adding 0.1 g of thickener and 1 g of dispersant to the dispersion and stirring with a homogenizer to prepare a first slurry. The thickener is CMC2020 from WEALTHY (carboxymethyl cellulose; degree of substitution: 1.00; viscosity: 15 mPa·s). The dispersant is CSB-400 from Toyochem (acrylic copolymer; glass transition temperature: - 25 °C; viscosity: 30 cP; solid content: 40 wt%).
(3) Dispersing 10 g of second inorganic particles in 20 g of water to prepare a dispersion. The second inorganic particles are an LLZO product from GanfengLithium (cubic Li_{6.4}La₃Zr_{1.4}Ta_{0.6}O₁₂; D50: 300±30 nm; room-temperature ionic conductivity: about 1.0 mS/cm).
(4) Adding 0.1 g of thickener and 1 g of dispersant to the dispersion and stirring with a homogenizer to prepare a second slurry. The thickener is CMC2020 from WEALTHY (carboxymethyl cellulose; degree of substitution: 1.00; viscosity: 15 mPa·s). The dispersant is CSB-400 from Toyochem (acrylic copolymer; glass transition temperature: -25 °C; viscosity: 30 cP; solid content: 40 wt%).
(5) Preparing a solution by adding 3 g of binder, 3.5 g of first-1 crosslinking agent, and 3.5 g of first-2 crosslinking agent to 90 g of liquid electrolyte, stirring this solution with a homogenizer, and then adding 0.02 g of photopolymerization initiator to this solution to prepare a first electrolyte composition. The binder is Kynar 2501-20 from Arkema (PVDF-HFP; weight average molecular weight: 350,000 g/mol; HFP substitution rate: 18.6 wt%). The first-1 crosslinking agent is M340 from Miwon Specialty Chemical (pentaerythritol triacrylate; PETA). The first-2 crosslinking agent is Miramer PU2100 from Miwon Specialty Chemical (polyurethane diacrylate, weight average molecular weight: 1400). The photopolymerization initiator is Omnirad TPO-L from IGM (Ethyl (2,4,6-trimethylbenzoyl) phenyl phosphinate). The liquid electrolyte is one in which 1 M LiTFSI (LiN(CF₃SO₂)₂) is dissolved in a non-aqueous solvent in which ethylene carbonate (EC) and ethyl methyl carbonate (EMC) are mixed at a volume ratio of 3:7, and 2 wt% of vinylene carbonate (VC) based on the total weight is added.
(6) Applying the first slurry to one surface of the substrate layer with a slot die and drying to prepare a structure comprising a first inorganic layer disposed on one surface of the substrate layer. The substrate layer is ND408 from Asahi (8 µm-thick PE film).
(7) Applying the second slurry to the other surface of the substrate layer with a slot die and drying to prepare a structure comprising a second inorganic layer disposed on the other surface of the substrate layer.
(8) Applying the first electrolyte composition onto the first inorganic layer and curing by UV irradiation to prepare a battery separator with a total thickness of 30 µm.

### Example 2. Battery separator

A battery separator with a total thickness of 50 µm was prepared by repeating the same procedure as in Example 1, except that in (8), the first electrolyte composition was applied onto each of the first inorganic layer and the second inorganic layer and cured by UV irradiation.

### Example 3. Battery separator

A battery separator with a total thickness of 50 µm was prepared by repeating the same procedure as in Example 1, except that in (5), 5.6 g of first-1 crosslinking agent and 1.4 g of first-2 crosslinking agent were added, and in (8), the first electrolyte composition was applied onto each of the first inorganic layer and the second inorganic layer and cured by UV irradiation.

### Example 4. Battery separator

A battery separator with a total thickness of 50 µm was prepared by repeating the same procedure as in Example 1, except that in (5), 1.4 g of first-1 crosslinking agent and 5.6 g of first-2 crosslinking agent were added, and in (8), the first electrolyte composition was applied onto each of the first inorganic layer and the second inorganic layer and cured by UV irradiation.

### Example 5. Battery separator

A battery separator with a total thickness of 50 µm was prepared by repeating the same procedure as in Example 1, except that in (5), M300 from Miwon Specialty Chemical (trimethylolpropane triacrylate) was used as the first-1 crosslinking agent, and in (8), the first electrolyte composition was applied onto each of the first inorganic layer and the second inorganic layer and cured by UV irradiation.

### Example 6. Battery separator

A battery separator with a total thickness of 50 µm was prepared by repeating the same procedure as in Example 1, except that in (5), M300 from Miwon Specialty Chemical (trimethylolpropane triacrylate) was used as the first-1 crosslinking agent, 5.6 g of first-1 crosslinking agent and 1.4 g of first-2 crosslinking agent were added, and in (8), the first electrolyte composition was applied onto each of the first inorganic layer and the second inorganic layer and cured by UV irradiation.

### Comparative Example 1. Battery separator

A battery separator was prepared by repeating the same procedure as in Example 1, except that in (6) and (7), the second slurry was applied to both surfaces of the substrate layer with a dual slot die and dried to prepare a structure comprising a second inorganic layer on both surfaces of the substrate layer.

### Comparative Example 2. Battery separator

A battery separator with a total thickness of 50 µm was prepared by repeating the same procedure as in Example 1, except that in (6) and (7), the second slurry was applied to both surfaces of the substrate layer with a dual slot die and dried to prepare a structure comprising a second inorganic layer on both surfaces of the substrate layer, and in (8), the first electrolyte composition was applied to both surfaces of the structure and cured by UV irradiation.

### Comparative Example 3. Battery separator

A battery separator was prepared by repeating the same procedure as in Example 1, except that in (6) and (7), the first slurry was applied to both surfaces of the substrate layer with a dual slot die and dried to prepare a structure comprising a first inorganic layer on both surfaces of the substrate layer.

### Comparative Example 4. Battery separator

A battery separator with a total thickness of 50 µm was prepared by repeating the same procedure as in Example 1, except that in (6) and (7), the first slurry was applied to both surfaces of the substrate layer with a dual slot die and dried to prepare a structure comprising a first inorganic layer on both surfaces of the substrate layer, and in (8), the first electrolyte composition was applied to both surfaces of the structure and cured by UV irradiation.

### Comparative Example 5. Battery separator

A battery separator with a total thickness of 30 µm was prepared by repeating the same procedure as in Example 1, except that in (6) and (7), the second slurry was applied to both surfaces of the substrate layer with a dual slot die and dried to prepare a structure comprising a second inorganic layer on both surfaces of the substrate layer, and in (8), the first electrolyte composition was applied to the other surface of the structure and cured by UV irradiation.

### [Evaluation]

### Experimental Example 1. Ionic conductivity

The ionic conductivity of the battery separator was evaluated according to the following procedure.
(1) Producing a coin cell in which the battery separators of the Examples and Comparative Examples are positioned between SUS plates. The coin cell is of 2016 type, and the area of the battery separator is 2.83 cm² (19pi).
(2) Calculating the resistance and ionic conductivity of the coin cell through electrical resistance measurement applying electrochemical impedance spectroscopy (EIS) and conversion via the Nyquist plot method. The electrical resistance measurement is carried out under AC voltage at an amplitude of 10 mV and a frequency of 1,000,000 to 1,000 Hz.

### Experimental Example 2. Battery performance

The discharge capacity and capacity retention of the batteries made with the battery separators of the Examples and Comparative Examples were measured by the following procedure.
(1) Preparing a slurry in which a mixture consisting of 94 wt% LiNiCoMnO₂ (Ni:Co:Mn=8:1:1) as a positive electrode active material, 3 wt% conductive carbon black (Super P; IMERYS Graphite & Carbon) as a conductive material, and 3 wt% polyvinylidene fluoride having a weight average molecular weight of about 800,000 as a binder is uniformly dispersed in NMP (N-methyl-2-pyrrolidone).
(2) Applying the slurry to one surface of a 20 µm-thick aluminum current collector at a loading amount of 4.0 mAh/cm², followed by drying and calendering to prepare a positive electrode plate having a positive electrode active material layer laminated thereon.
(3) Punching the positive electrode plate to a size of 1.54 cm² (14 pi).
(4) Calendering lithium metal (negative electrode active material layer) onto a 10 µm-thick copper plate to produce a negative electrode plate with a total thickness of 100 µm.
(5) Punching the negative electrode plate to a size of 1.76 cm² (15 pi).
(6) Producing an electrode assembly with a structure in which the positive electrode active material layer of the positive electrode plate and the negative electrode active material layer of the negative electrode plate are arranged to face each other, and the battery separator cut to a size of 2.83 cm² (19 pi) is disposed between the positive electrode active material layer and the negative electrode active material layer.
(7) Accommodating this electrode assembly in a pouch to complete a battery. Five battery samples were prepared. The performance of the battery is the arithmetic mean value of the five samples.
   Preparing an electrochemical analyzer (Toyo, Toscat-3100).
(8) Charging the battery in a CC-CV manner under conditions of 0.2 C, 4.3 V, and a cut-off of 0.05 C, and discharging the battery under conditions of 0.5 C, 3.0 V, and a cut-off of 0.05 C.
(9) Measuring the initial (1 cycle) charge and discharge capacities.
(10) Measuring the charge and discharge capacities after repeating 50 cycles.

### [Results and Discussion]

Table 1 below shows the test results of the Examples and Comparative Examples.

**[Table 1]**

| Category | | Unit | Example | | | | | | Comparative Example | | | | |
|---|---|---|---|---|---|---|---|---|---|---|---|---|---|
| | | | 1 | 2 | 3 | 4 | 5 | 6 | 1 | 2 | 3 | 4 | 5 |
| Resistance | | Ohm | 1.88 | 1.56 | 1.93 | 1.61 | 1.68 | 1.91 | 1.92 | 1.65 | 1.95 | 1.78 | 1.98 |
| Ionic conductivity | | mS/cm | 1.11 | 1.32 | 1.05 | 1.19 | 1.18 | 1.09 | 1.03 | 1.21 | 1.05 | 1.13 | 1.01 |
| Cycle performance | 1st (Charge) | mAh | 42.8 | 44.6 | 43.9 | 43.8 | 44.8 | 43.8 | 41.3 | 42.9 | 42.1 | 43.5 | 41.2 |
| | 1st (Discharge) | mAh | 42.3 | 44.1 | 43.2 | 42.8 | 43.8 | 42.9 | 40.8 | 42.1 | 42.1 | 43.5 | 41.2 |
| | 50th (Discharge) | mAh | 41.8 | 41.1 | 40.5 | 39.1 | 40.9 | 40.2 | 38.1 | 39.2 | 38.5 | 40.0 | 36.4 |
| | Retention rate | % | 98.8 | 93.1 | 93.8 | 91.4 | 93.4 | 93.7 | 94.1 | 93.1 | 92.7 | 92.8 | 91.5 |

## Claims

1. A battery separator, comprising:
a substrate layer;
a first inorganic layer disposed on one surface of the substrate layer and comprising first inorganic particles;
a second inorganic layer disposed on the other surface of the substrate layer and comprising second inorganic particles; and
a first electrolyte layer disposed on one surface of the first inorganic layer and comprising a first electrolyte composition,
wherein the first inorganic particles comprise flame-retardant inorganic particles, and
wherein the second inorganic particles comprise lithium-ion-transferring inorganic particles.

2. The battery separator of claim 1,
wherein the first inorganic particles comprise SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, Al₂O₃, AlOOH, Al(OH)₃, TiO₂, or a combination thereof.

3. The battery separator of claim 1,
wherein D50 (nm) of the first inorganic particles and D50 (nm) of the second inorganic particles are each independently in a range of 100 to 1000.

4. The battery separator of claim 1,
wherein the true density (g/cm³) of the first inorganic particles is smaller than the true density (g/cm³) of the second inorganic particles.

5. The battery separator of claim 1,
wherein the second inorganic particles comprise LiₓTi_{y}(PO₄)₃ (0<x<2, 0<y<3), LiₓAl_{y}Ti_{z}(PO₄)₃ (0<x<2, 0<y<1, 0<z<3), LiₓLa_{y}TiO₃ (0<x<2, 0<y<3), Li₆₊ₓLa₃Zr_{2-y}M_{y}O_{12-z} (0≤x≤1, 0≤y≤0.5, 0≤z≤0.2), or a combination thereof.

6. The battery separator of claim 1,
wherein the second inorganic particles comprise a garnet-type crystal structure.

7. The battery separator of claim 1,
wherein the second inorganic particles comprise Li₆₊ₓLa₃Zr_{2-y}M_{y}O_{12-z} (0≤x≤1, 0≤y≤0.5, 0≤z≤0.2).

8. The battery separator of claim 1,
wherein the substrate layer comprises a polyolefin-based film.

9. The battery separator of claim 1,
wherein the first electrolyte composition comprises a first binder, a first liquid electrolyte, and a first crosslinking agent.

10. The battery separator of claim 9,
wherein the first binder comprises a first unit of vinylidene fluoride and a second unit of a fluorine-containing alkyl vinyl compound.

11. The battery separator of claim 9,
wherein a weight average molecular weight (g/mol) of the binder is in a range of 150,000 to 600,000, and
wherein a content (wt%) of the second unit of the binder is in a range of 10 to 25.

12. The battery separator of claim 9,
wherein the first liquid electrolyte comprises a non-aqueous solvent, a lithium salt, and an additive.

13. The battery separator of claim 12,
wherein the non-aqueous solvent comprises a carbonate-based compound.

14. The battery separator of claim 13,
wherein the first electrolyte layer comprises a linear carbonate-based compound in a volume larger than that of a cyclic carbonate-based compound.

15. The battery separator of claim 14,
wherein the linear carbonate-based compound comprises dimethyl carbonate, diethyl carbonate, dipropyl carbonate, methylpropyl carbonate, ethylpropyl carbonate, ethylmethyl carbonate, or a combination thereof.

16. The battery separator of claim 14,
wherein the linear carbonate-based compound is a liquid at room temperature.

17. The battery separator of claim 14,
wherein the cyclic carbonate-based compound comprises vinylethylene carbonate, vinylene carbonate, ethylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, propylene carbonate, butylene carbonate, or a combination thereof.

18. The battery separator of claim 14,
wherein the cyclic carbonate-based compound is a solid at room temperature.

19. The battery separator of claim 14,
wherein the volume (vol%) of the linear carbonate-based compound in the first electrolyte layer is in a range of 55 to 95.

20. The battery separator of claim 9,
wherein the first crosslinking agent comprises a first-1 crosslinking agent and a first-2 crosslinking agent having different numbers of crosslinkable functional groups, and
wherein the number of crosslinkable functional groups of the first-1 crosslinking agent is greater than the number of crosslinkable functional groups of the first-2 crosslinking agent.

21. The battery separator of claim 20,
wherein the number of crosslinkable functional groups of the first-1 crosslinking agent is 3 or more.

22. The battery separator of claim 20,
wherein the first-1 crosslinking agent comprises a tri(meth)acrylate-based compound, a tetra(meth)acrylate-based compound, a penta(meth)acrylate-based compound, a hexa(meth)acrylate-based compound, or a combination thereof.

23. The battery separator of claim 20,
wherein the first-1 crosslinking agent comprises a monomeric compound.

24. The battery separator of claim 20,
wherein the first-1 crosslinking agent comprises trimethylolethane tri(meth)acrylate, trimethylolpropane tri(meth)acrylate, ethoxylated trimethylolpropane tri(meth)acrylate, propoxylated trimethylolpropane tri(meth)acrylate, glycerol tri(meth)acrylate, ethoxylated glycerol tri(meth)acrylate, propoxylated glycerol tri(meth)acrylate, tris(2-hydroxyethyl)isocyanurate tri(meth)acrylate, pentaerythritol tetra(meth)acrylate, ethoxylated pentaerythritol tetra(meth)acrylate, propoxylated pentaerythritol tetra(meth)acrylate, erythritol tetra(meth)acrylate, ditrimethylolpropane tetra(meth)acrylate, dipentaerythritol penta(meth)acrylate, ethoxylated dipentaerythritol penta(meth)acrylate, sorbitol penta(meth)acrylate, dipentaerythritol hexa(meth)acrylate, ethoxylated dipentaerythritol hexa(meth)acrylate, sorbitol hexa(meth)acrylate, or a combination thereof.

25. The battery separator of claim 20,
wherein the number of functional groups of the first-2 crosslinking agent is 2.

26. The battery separator of claim 20,
wherein the first-2 crosslinking agent comprises a di(meth)acrylate-based compound.

27. The battery separator of claim 20,
wherein the first-2 crosslinking agent comprises a polymeric compound.

28. The battery separator of claim 20,
wherein the first-2 crosslinking agent comprises polyethylene glycol di(meth)acrylate, poly(ethylene oxide-propylene oxide) di(meth)acrylate, polyurethane di(meth)acrylate, polycarbonate di(meth)acrylate, or a combination thereof.

29. The battery separator of claim 20,
wherein a ratio (C1-1:C1-2) of the weight (C1-1) of the first-1 crosslinking agent in the first electrolyte layer to the weight (C1-2) of the first-2 crosslinking agent in the first electrolyte layer is in a range of 1:9 to 9:1.

30. The battery separator of claim 1,
wherein the battery separator further comprises a second electrolyte layer disposed on the other surface of the substrate layer and comprising a second electrolyte composition.

31. A battery comprising a positive electrode, a negative electrode, and a separator disposed between the positive electrode and the negative electrode,
wherein the separator comprises a substrate layer; a first inorganic layer disposed on one surface of the substrate layer and comprising first inorganic particles; a second inorganic layer disposed on the other surface of the substrate layer and comprising second inorganic particles; and a first electrolyte layer disposed on one surface of the first inorganic layer and comprising a first electrolyte composition,
wherein the first inorganic particles comprise flame-retardant inorganic particles, and
wherein the second inorganic particles comprise lithium-ion-transferring inorganic particles.

32. The battery of claim 31,
wherein the negative electrode comprises lithium metal, and
wherein the first electrolyte layer is disposed adjacent to the positive electrode.

33. The battery of claim 31,
wherein the separator further comprises a second electrolyte layer disposed on the other surface of the substrate layer and comprising a second electrolyte composition,
wherein the negative electrode comprises lithium metal,
wherein the first electrolyte layer is disposed adjacent to the positive electrode, and
wherein the second electrolyte layer is disposed adjacent to the negative electrode.
